# EUROPEAN PATENT SPECIFICATION

(11) **EP 3 951 418 B1**
(45) Date of publication and mention of the grant of the patent: **25.06.2025**
(21) Application number: 21188739.3
(22) Date of filing: 30.07.2021
(51) Int. Cl.: G01S 5/02, H04W 64/00, H04W 4/02, G01S 5/04, G01S 5/06, H04W 88/08, H04W 88/18, H04W 92/04

(54) **COORDINATION OF TRANSMISSION RECEPTION POINT SELECTION BETWEEN BASE STATION AND LOCATION MANAGEMENT FUNCTION**
KOORDINATION DER AUSWAHL DER SENDEEMPFANGSPUNKTE, TRPS, ZWISCHEN BASISSTATION UND STANDORTVERWALTUNGSFUNKTION, LMF
COORDINATION DE SÉLECTION DE POINTS DE TRANSMISSION ET DE RÉCEPTION, TRPS, ENTRE STATION DE BASE ET FONCTION DE GESTION D'EMPLACEMENT, LMF

(30) Priority: 04.08.2020 US 202063060859 P
(43) Date of publication of application: 09.02.2022
(73) Proprietor: Nokia Technologies Oy, 02610 Espoo (FI)
(72) Inventor: Kelley, Sean, Hoffman Estates, 60010 (US); Säily, Mikko, 07150 Laukkoski (FI); Pantelidou, Anna, 91300 Massy (FR)
(74) Representative: Script Intellectual Property LLP

(56) References cited:
- ERICSSON ET AL: "Discussion on TRP ID issue in measurement messages", vol. RAN WG3, no. Online; 20200601 - 20200611, 21 May 2020 (2020-05-21), XP051887836, Retrieved from the Internet <URL:https://ftp.3gpp.org/tsg_ran/WG3_Iu/TSGR3_108-e/Docs/R3-203735.zip R3-203735 NRPPa TRPid disc.docx> [retrieved on 20200521]
- NOKIA ET AL: "(TP for NR_POS BL CR for TS 38.455) Further details for the measurement procedures", vol. RAN WG3, no. Shanghai; 20200601 - 20200611, 22 May 2020 (2020-05-22), XP051889197, Retrieved from the Internet <URL:https://ftp.3gpp.org/tsg_ran/WG3_Iu/TSGR3_108-e/Docs/R3-203431.zip R3-203431 measurement procedures.doc> [retrieved on 20200522]
- ERICSSON ET AL: "(TP for NR_POS BL CR for TS 38.455) fixing NRPPa RAN Measurement ID and TRP ID issues", vol. RAN WG3, no. Online; 20200601 - 20200611, 15 June 2020 (2020-06-15), XP051898814, Retrieved from the Internet <URL:https://ftp.3gpp.org/tsg_ran/WG3_Iu/TSGR3_108-e/Docs/R3-204331.zip R3-204331_was_4317_NRPPa TRPid TP_v2.docx> [retrieved on 20200615]
- INTEL CORPORATION: "On TRP selection", vol. RAN WG3, no. Online; 20200420 - 20200430, 9 April 2020 (2020-04-09), XP051870500, Retrieved from the Internet <URL:https://ftp.3gpp.org/tsg_ran/WG3_Iu/TSGR3_107bis_e/Docs/R3-201681.zip R3-201681-TRP-selection-v0.doc> [retrieved on 20200409]

## Description

### TECHNICAL FIELD:

Some example embodiments may generally relate to mobile or wireless telecommunication systems, such as Long Term Evolution (LTE), fifth generation (5G) radio access technology (RAT), new radio (NR) access technology, and/or other communications systems. For example, certain example embodiments may relate to systems and/or methods for coordinating transmission reception point selection between a location management function and base station.

### BACKGROUND:

Examples of mobile or wireless telecommunication systems may include 5G RAT, the Universal Mobile Telecommunications System (UMTS) Terrestrial Radio Access Network (UTRAN), LTE Evolved UTRAN (E-UTRAN), LTE-Advanced (LTE-A), LTE-A Pro, NR access technology, and/or MulteFire Alliance. 5G wireless systems refer to the next generation (NG) of radio systems and network architecture. A 5G system is typically built on a 5G NR, but a 5G (or NG) network may also be built on E-UTRA radio. It is expected that NR can support service categories such as enhanced mobile broadband (eMBB), ultra-reliable low-latency-communication (URLLC), and massive machine type communication (mMTC). NR is expected to deliver extreme broadband, ultra-robust, low latency connectivity, and massive networking to support the Internet of Things (IoT). The next generation radio access network (NG-RAN) represents the RAN for 5G, which may provide radio access for NR, LTE, and LTE-A. It is noted that the base station (BS) in 5G *(e.g.,* similar to the Node B in UTRAN or the Evolved Node B (eNB) in LTE) providing radio access functionality to a user equipment may be referred to as next-generation Node B (gNB) when built on NR radio, and may be referred to as next-generation eNB (NG-eNB) when built on E-UTRA radio.

Ericsson et al: "Discussion on TRP ID issue in measurement messages" 3GGP draft; R3-203735, vol. RAN WG3, no. (2020-05-21), XP051887836 addresses the remaining issue on TRP ID definition and its presence in NRPPa. The following proposals regarding NRPPa leftover issues from last meeting have been made:
Proposal 1: the TRP ID presence in the MEASUREMENT REQUEST message is optional.
Proposal 2: the TRP ID presence in the MEASUREMENT RESPONSE message is optional.
Proposal 3: the TRP ID presence in the MEASUREMENT REPORT message is optional.
Proposal 4: the TRP ID presence in the MEASUREMENT UPDATE message is optional.
Proposal 5: remove the TRP ID IE from the MEASUREMENT FAILURE INDICATION message.
Proposal 6: the NRPPa measurement procedures are non-UE associated Proposal 7: Introduce NR-E-CID support in the existing NRPPa E-CID Measurement Initiation procedure.
Proposal 8: the RAN UE measurement ID is not needed in the Failure message.
Proposal 9: remove FFS on max value to 65535.

### SUMMARY:

The invention is set out in the appended set of claims.

### BRIEF DESCRIPTION OF THE DRAWINGS:

For proper understanding of example embodiments, reference should be made to the accompanying drawings, wherein:
FIG. 1 illustrates an example of user equipment positioning architecture.
FIG. 2 illustrates an example of a measurement reporting procedure.
FIG. 3 illustrates an example procedure for sending measurements periodically from a NG-RAN node to a location management function.
FIG. 4 illustrates an example of a signaling diagram according to certain embodiments.
FIG. 5 illustrates an example of a flow diagram of a method according to various embodiments.
FIG. 6 illustrates an example of a flow diagram of a method according to some embodiments.
FIG. 7 illustrates an example of various network devices according to some embodiments.
FIG. 8 illustrates an example of a 5G network and system architecture according to certain embodiments.

### DETAILED DESCRIPTION:

It will be readily understood that the components of certain example embodiments, as generally described and illustrated in the figures herein, may be arranged and designed in a wide variety of different configurations. Thus, the following detailed description of some example embodiments of systems, methods, apparatuses, and computer program products for coordinating transmission reception point (TRP) selection between a location management function (LMF) and base station (BS) is not intended to limit the scope of certain embodiments, but is instead representative of selected example embodiments.

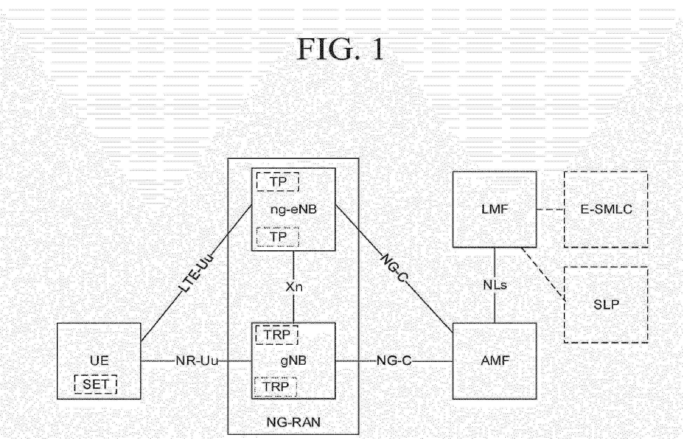

As noted above, FIG. 1 illustrates a NG-RAN positioning architecture with a LMF and TRP. The LMF may manage various location services for target user equipment (UE), including UE positioning. The LMF may determine which positioning method to use, such as according to quality of service (QoS) requirements, UE capabilities, and BS capabilities, and invokes the positioning method in the UE and/or BSs to produce positioning measurements. The LMF may then combine all of the received measurement results with other assistance data to calculate a location estimate for the target UE. In contrast, the TRP is a functional component of the BS that may support functions for a transmission point (TP), reception point (RP), and/or TP-RP combination.

New Radio Positioning Protocol A (NRPPa) may carry information between the BS and LMF via an access and mobility management function (AMF). NRPPa messages could be transferred over a next generation control plane (NG-C) interface using next generation application protocol (NGAP) signaling, either UE-associated or non UE-associated. In particular, UE-associated signaling may use a logical connection associated to a UE that is uniquely identified by at least one UE NGAP identifier (ID), enabling UE identification at the BS. Furthermore, non UE-associated signaling does not use a UE-associated logical connection; thus, UE identification is not possible at the BS in this way.

3GPP Rel-16 introduced new positioning methods, such as Multi-RTT, uplink (UL) time difference of arrival (UL-TDOA), and UL angle of arrival (UL-AoA), using NR reference signal measurements to calculate the location of a target UE. Some of these NR positioning methods rely on measurements of uplink reference signals, such as UL sounding reference signals (SRS), transmitted by the target UE, where the measurements are performed by TRPs hosted by the serving and/or non-serving BSs. Uplink measurement may be associated with applicable positioning methods as follows:

| **Measurement** | **Applicable Positioning Method(s)** |
|---|---|
| gNB Rx-Tx time difference measurement | Multi-RTT |
| UL SRS-RSRP | Multi-RTT, UL-TDOA, UL-AoA |
| UL Angle of Arrival (azimuth and elevation) | Multi-RTT, UL-AoA |
| UL RTOA | UL-TDOA |

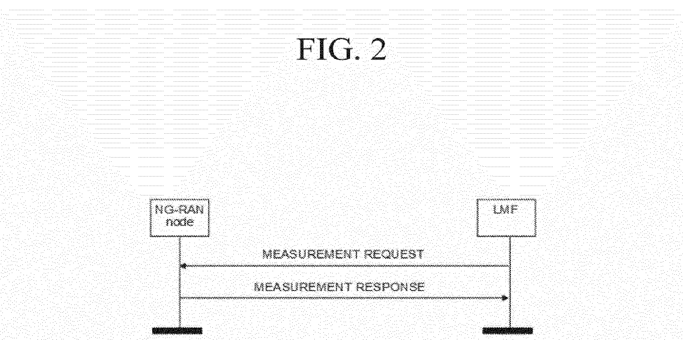

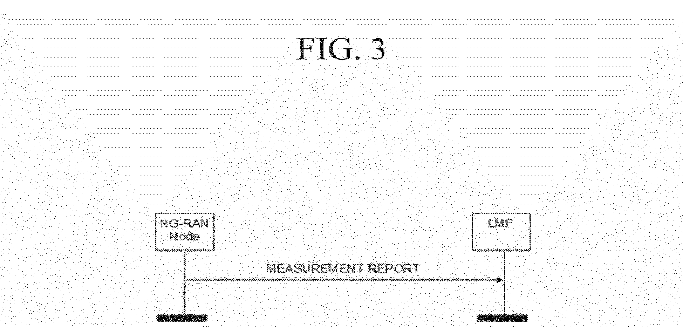

The example NRPPa measurement procedures illustrated in FIGS. 2 and 3 may enable the LMF to request one or more TRPs in the BS to perform and report positioning measurements. For example, a MEASUREMENT REQUEST message may include any combination of a *TRP Measurement Request List* information element (IE) indicating the TRP(s) from which measurements are requested, and *a Measurement Quantities* IE indicating the desired measurements (*e.g*., UL-relative time of arrival (RTOA) and/or UL AoA).

For certain positioning methods such as Multi-RTT, it is necessary for TRP selection to be centralized at the LMF, such that uplink measurements by BS(s) and downlink measurements by the target UE are associated with the same set of TRPs. However, for certain positioning methods such as UL TDOA and UL AoA, which require only uplink measurements, it could be beneficial for a BS to perform TRP selection. TRP selection by a BS may be for instance beneficial in case there is a high density of TRPs where UE mobility prevents optimal selection performance by the LMF. In addition, multiple UE mobility profiles, such as stationary, pedestrian, and/or vehicle, located in the same geographical area may prevent optimal TRP selection by the LMF and reduce the performance of the positioning. Furthermore, if a BS has an active MDT configuration running across multiple TRPs, it may be beneficial for the BS to complete the MDT operation on the existing TRPs before reconfiguring a new set of TRPs.

Certain embodiments described herein may have various benefits and/or advantages to overcome the disadvantages described above. For example, certain embodiments may enable an LMF to continue controlling TRP selection for scenarios where it is required, while also allowing flexibility for the BS to perform TRP selection for scenarios where it may be beneficial. Some embodiments may also improve TRP selection results through efficient performance of NR positioning, such as with improved accuracy due to better quality measurements and/or reduction of measurement failures due to incorrect TRP selection. Certain embodiments may also allow the BS to use other information otherwise unavailable at the LMF, such as radio resource control (RRC)/radio resource management (RRM) and/or UE mobility history. Thus, certain embodiments discussed below are directed to improvements in computer-related technology.

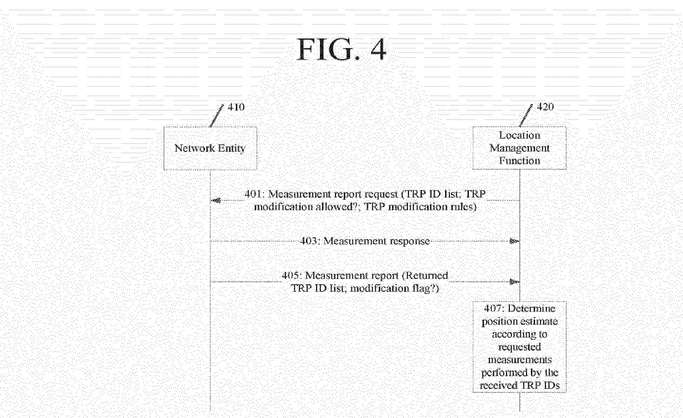

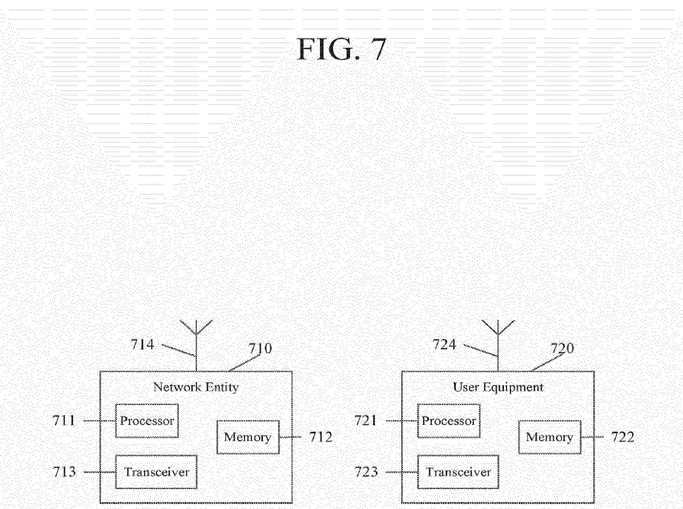

FIG. 4 illustrates an example of a signaling diagram depicting flexible TRP selection coordination between NE 410 and LMF 420. NE 410 and LMF 420 may be similar to NE 710, as illustrated in FIG. 7, according to certain embodiments.

At 401, LMF 420 transmits at least one measurement report request to NE 410. In some embodiments, the measurement report request includes at least one measurement quantities IE *(e.g., "Measurement Quantities* IE") indicating a request for UL RTOA measurements for UL-TDOA. The measurement report request includes at least one measurement request list IE *(e.g., "TRP Measurement Request List* IE") containing a list of TRP IDs selected by LMF 420 configured to perform uplink measurements.

**The** measurement report request includes one or more indications that NE 410 may modify the list of TRP IDs. The indication may indicate that the list of TRP IDs is a recommendation or requirement, and/or may designate specific TRPs in the list of TRP IDs as a recommendation or requirement. For example, the measurement report request may include an indication, such as *TRP List Modification Allowed* IE, indicating whether the list of TRP IDs is a recommendation and may be modified by NE 410. This indication may be a Boolean value (*e.g*., "true" or "false") or any enumerated value (*e.g*., "allowed"). If the list of TRP IDs is a recommendation, the indication may indicate that NE 410 is authorized to add and/or remove TRPs from the list of TRP IDs. Alternatively, if the list of TRP IDs is a requirement, the indication may indicate that NE 410 is not authorized to add and/or remove TRPs from the list of TRP IDs. Other indications may indicate that NE 410 is authorized to remove from - but not add to - the list of TRP IDs.

The measurement report request includes any number of TRP modification rules, and, optionally, constraints to further control how NE 410 may modify the list of TRP IDs in case TRP modification is allowed. As an example, LMF 420 may include for recommended TRP IDs a list of alternative TRP IDs ("white list") that NE 410 may use to replace the recommended TRP IDs in the list of TRP IDs. Additionally, LMF 420 may signal rankings in the white list by a recommended selection priority. Furthermore, the measurement report request may specify any combination of a maximum and/or minimum number of TRPs; a maximum and/or minimum distance between TRPs; an absolute and/or relative direction of TRPs; indications of TRPs that NE 410 should exclude from the list of TRP IDs ("black list"); indications of TRPs that NE 410 should preserve in the list of TRP IDs; and indications of TRPs that NE 410 should include in the list of TRP IDs reported in a first measurement report, but may exclude in subsequent measurement reports.

In certain embodiments, the measurement report request may be transmitted via UE-associated signalling with NE 410 while using non-UE-associated signaling with non-serving NEs (which may also be similar to NE 710 in FIG. 7). Measurement procedures performed by NE 410 may also be UE-associated, allowing NE 410 to select TRPs using UE-specific information, such as RRM measurements, MDT configurations, and/or UE history information. UEs may be similar to UE 720, as shown in FIG. 7.

In some embodiments, the measurement report request may include at least one report characteristics IE *(e.g., "Report Characteristics* IE") indicating whether the measurement request is "on-demand" or "periodic." In some embodiments, this indication may be a Boolean value (*e.g*., "true" or "false") or any enumerated value (*e.g*., "OnDemand" or "Periodic").

At 403, where the at least one report characteristics IE includes at least one predetermined parameter, such as "OnDemand," NE 410 may transmit to LMF 420 at least one measurement response, which may include an altered or unaltered list of TRP IDs and their requested measurements. In various embodiments, where NE 410 received *TRP List Modification Allowed* IE with an affirmative value at 401, NE 410 may modify the list of TRP IDs selected by LMF 420 with all or a subset of TRPs included in a white list received from LMF 420, such as when NE 410 is positioning a UE in an existing MDT session to leverage the same set of measurements. If *TRP List Modification Allowed* IE was affirmatively indicated by LMF 420, NE 410 may replace TRP-A in the recommended list with TRP-B from the white list. If NE 410 received indications that particular TRPs are recommendations without receiving a white list from LMF 420, NE 410 may select alternative TRPs which differ from those TRPs selected by LMF 420. NE 410 may also select TRP IDs based on RRM measurements and/or other performance information known locally by NE 410. NE 410 may also drop TRP IDs from the list of TRP IDs selected by LMF 420 without selecting an alternative TRP.

Additionally or alternatively, NE 410 may measure a larger group of TRPs, such as according to spatial relation information in an SRS configuration, and report a pre-determined number of strongest TRPs to LMF 420. NE 410 may use different TRP IDs to reflect UE history information and/or estimated UE mobility profiles.

In certain embodiments, NE 410 may transmit to LMF 420 indications that any number of TRP IDs are alternatives, enabling LMF 420 to interpret the information associated with the TRPs indicated by NE 420 accordingly. For example, a modification flag IE *(e.g., "Modification Flag* IE") in the measurement response may indicate to LMF 420 that missing and/or new TRP IDs should be considered a result of the modification process performed by NE 410, rather than an error. The modification flag IE may be configured as a Boolean value *(e.g.,* "true" or "false") or any enumerated value *(e.g.,* "modified"), and/or may be indicated per TRP ID.

In some embodiments, if a report characteristics IE *(e.g., "Report Characteristics* IE") indicates "on-demand," NE 410 may transmit the list of TRP IDs and/or measurement results in, for example, a measurement response message to LMF 420. Alternatively, if the *Report Characteristics* IE indicates "periodic," NE 410 may transmit a measurement response message to LMF 420 without the list of TRP IDs and/or measurement results, followed by, at 405, transmitting at least one measurement report message to LMF 420 including the altered or unaltered list of TRP IDs and/or measurement results according to the requested periodicity. In various embodiments, where the report characteristics IE indicates "periodic," the measurement report message may also include the modification flag IE.

At 407, LMF 420 may determine at least one position estimate according to the requested measurements performed by the modified set of TRP IDs, which may improve the accuracy of a position computation. For example, such an improved position estimate computation may be based on requested measurements from a modified set of TRP IDs selected by NE 410 at 403 that are more optimal than the list of TRP IDs selected by LMF 420 at 401, for example, due to the location of the modified set of TRPs relative to a UE, the location of the modified set of TRPs relative to each other, and the number of TRPs in the modified set of TRPs.

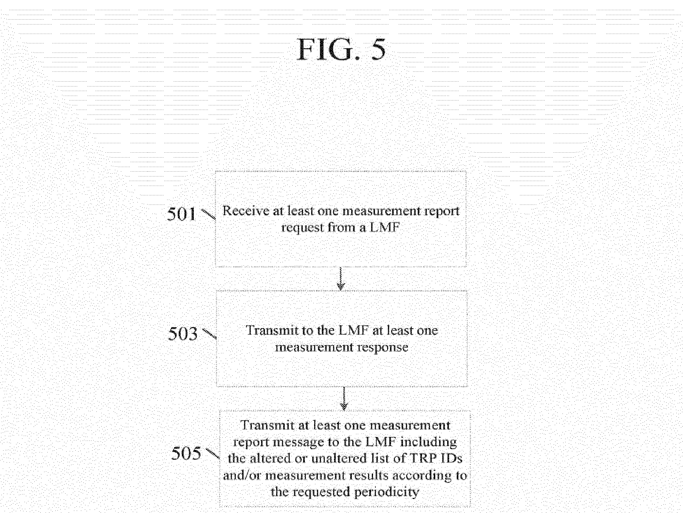

FIG. 5 illustrates an example of a flow diagram of a method that may be performed by a NE, such as NE 710 illustrated in FIG. 7, according to various embodiments. At 501, the NE may receive at least one measurement report request from a LMF, such as NE 710 in FIG. 7. In some embodiments, the measurement report request may include at least one measurement quantities IE *(e.g., "Measurement Quantities* IE") indicating at least one request for UL RTOA measurements for UL-TDOA. The measurement report request includes at least one measurement request list IE *(e.g., "TRP Measurement Request List* IE") containing a list of TRP IDs selected by the LMF configured to perform uplink measurements.

The measurement report request includes one or more indications that the NE may modify the list of TRP IDs. The one or more indications may indicate that the list of TRP IDs is a recommendation or requirement, or may designate specific TRPs in the list of TRP IDs as a recommendation or requirement. For example, the measurement report request may include an indication, such as *TRP List Modification Allowed* IE, indicating whether the list of TRP IDs is a recommendation and may be modified by the NE. This indication may be a Boolean value (*e.g*., "true" or "false") or any enumerated value (*e.g*., "allowed"). If the list of TRP IDs is a recommendation, the indication may designate that the NE is authorized to add and/or remove TRPs from the list of TRP IDs. Alternatively, if the list of TRP IDs is a requirement, the indication may designate that the NE is not authorized to add and/or remove TRPs from the list of TRP IDs. Other indications may indicate that the NE is authorized to remove from - but not add to - the list of TRP IDs.

The measurement report request includes any number of TRP modification rules , and, optionally, constraints to further control how the NE may modify the list of TRP IDs in case TRP modification is allowed. As an example, the LMF may include for recommended TRP IDs a list of alternative TRP IDs ("white list") that the NE may use to replace the recommended TRP IDs in the list of TRP IDs. Additionally, the LMF may signal rankings in the white list by a recommended selection priority. Furthermore, the measurement report request may specify any combination of a maximum and/or minimum number of TRPs; a maximum and/or minimum distance between TRPs; an absolute and/or relative direction of TRPs; indications of TRPs that the NE should exclude from the list of TRP IDs ("black list"); indications of TRPs that the NE should preserve in the list of TRP IDs; and indications of TRPs that the NE should include in the list of TRP IDs reported in a first measurement report, but may exclude in subsequent measurement reports.

In certain embodiments, the measurement report request may be transmitted via UE-associated signalling with the NE while using non-UE-associated signaling with non-serving NEs (which may also be similar to NE 710 in FIG. 7). Measurement procedures performed by the NE may also be UE-associated, allowing the NE to select TRPs using UE-specific information, such as RRM measurements, MDT configurations, and/or UE history information. UEs may be similar to UE 720, as shown in FIG. 7.

In some embodiments, the measurement report request may include a report characteristics IE *(e.g., "Report Characteristics* IE") indicating whether the measurement request is "on-demand" or "periodic." In some embodiments, this indication may be a Boolean value (*e.g*., "true" or "false") or any enumerated value (*e.g*., "OnDemand" or "Periodic").

At 503, where the at least one report characteristics IE includes at least one predetermined parameter, such as "OnDemand", the NE may transmit to the LMF at least one measurement response, which may include an altered or unaltered list of TRP IDs and their requested measurements. In various embodiments, where the NE received *TRP List Modification Allowed* IE with an affirmative value at 501, the NE may modify the list of TRP IDs selected by the LMF with all or a subset of TRPs included in a white list received from the LMF, such as when the NE is positioning a UE in an existing MDT session to leverage the same set of measurements. If *TRP List Modification Allowed* IE was affirmatively indicated by the LMF, the NE may replace TRP-A in the recommended list with TRP-B from the white list. If the NE received indications that particular TRPs are recommendations without receiving a white list from the LMF, the NE may select alternative TRPs which differ from those TRPs selected by the LMF. The NE may also select TRP IDs based on RRM measurements and/or other performance information known locally by NE 410.

Additionally or alternatively, the NE may measure a larger group of TRPs, such as according to spatial relation information in an SRS configuration, and report a pre-determined number of strongest TRPs to the LMF. The NE may use different TRP IDs to reflect UE history information and/or estimated UE mobility profiles.

In certain embodiments, the NE may transmit to the LMF indications that any number of TRP IDs are alternatives, enabling the LMF to interpret the information associated with the TRPs indicated by the NE accordingly. For example, a modification flag IE *(e.g., "Modification Flag* IE") in the measurement response may indicate to the LMF that missing and/or new TRP IDs should be considered a result of the modification process performed by the NE, rather than an error. The modification flag IE may be configured as a Boolean value *(e.g.,* "true" or "false") or any enumerated value *(e.g.,* "modified"), and/or may be indicated per TRP ID.

In some embodiments, if a report characteristics IE *(e.g., "Report Characteristics* IE") indicates "on-demand," the NE may transmit the list of TRP IDs and/or measurement results in, for example, a measurement response message to the LMF. Alternatively, if the *Report Characteristics* IE indicates "periodic," the NE may transmit a measurement response message to the LMF without the list of TRP IDs and/or measurement results, followed by, at 505, transmitting at least one measurement report message to the LMF including the altered or unaltered list of TRP IDs and/or measurement results according to the requested periodicity.

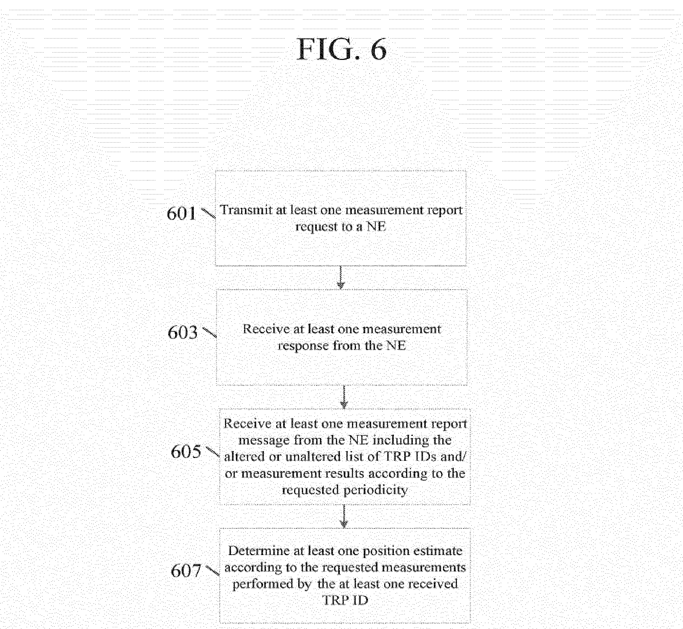

FIG. 6 illustrates an example of a flow diagram of a method that may be performed by a LMF, such as NE 710 illustrated in FIG. 7, according to various embodiments. At 601, the LMF transmits at least one measurement report request to a NE. In some embodiments, the measurement report request may include at least one measurement quantities IE *(e.g., "Measurement Quantities* IE") indicating a request for UL RTOA measurements for UL-TDOA. The measurement report request includes at least one measurement request list IE *(e.g., "TRP Measurement Request List* IE") containing a list of TRP IDs selected by the LMF configured to perform uplink measurements.

The measurement report request includes one or more indications that the NE may modify the list of TRP IDs. The indication may indicate that the list of TRP IDs is a recommendation or requirement, and/or may designate specific TRPs in the list of TRP IDs as a recommendation or requirement. For example, the measurement report request may include an indication, such as *TRP List Modification Allowed* IE, indicating whether the list of TRP IDs is a recommendation and may be modified by the NE. This indication may be a Boolean value (e.g., "true" or "false") or any enumerated value (e.g., "allowed"). If the list of TRP IDs is a recommendation, the indication may indicate that the NE is authorized to add and/or remove TRPs from the list of TRP IDs. Alternatively, if the list of TRP IDs is a requirement, the indication may indicate that the NE is not authorized to add and/or remove TRPs from the list of TRP IDs. Other indications may indicate that the NE is authorized to remove from - but not add to - the list of TRP IDs.

The measurement report request includes any number of TRP modification rules , and, optionally, constraints to further control how the NE may modify the list of TRP IDs in case TRP modification is allowed. As an example, the LMF may include for recommended TRP IDs a list of alternative TRP IDs ("white list") that the NE may use to replace the recommended TRP IDs in the list of TRP IDs. Additionally, the LMF may signal rankings in the white list by a recommended selection priority. Furthermore, the measurement report request may specify any combination of a maximum and/or minimum number of TRPs; a maximum and/or minimum distance between TRPs; an absolute and/or relative direction of TRPs; indications of TRPs that the NE should exclude from the list of TRP IDs ("black list"); indications of TRPs that the NE should preserve in the list of TRP IDs; and indications of TRPs that the NE should include in the list of TRP IDs reported in a first measurement report, but may exclude in subsequent measurement reports.

In certain embodiments, the measurement report request may be transmitted via UE-associated signalling with the NE while using non-UE-associated signaling with non-serving NEs (which may also be similar to NE 710 in FIG. 7). Measurement procedures performed by the NE may also be UE-associated, allowing the NE to select TRPs using UE-specific information, such as RRM measurements, MDT configurations, and/or UE history information. UEs may be similar to UE 720, as shown in FIG. 7.

In some embodiments, the measurement report request may include a report characteristics IE *(e.g., "Report Characteristics* IE") indicating whether the measurement request is "on-demand" or "periodic." This indication may be a Boolean value *(e.g.,* "true" or "false") or any enumerated value *(e.g.,* "OnDemand" or "Periodic").

At 603, where the at least one report characteristics IE includes at least one predetermined parameter, such as "OnDemand," the LMF may receive from the NE at least one measurement response, which may include an altered or unaltered list of TRP IDs and their requested measurements. In various embodiments, where the NE received *TRP List Modification Allowed* IE with an affirmative value at 601, the NE may modify the list of TRP IDs selected by the LMF with all or a subset of TRPs included in a white list received from the LMF, such as when the NE is positioning a UE in an existing MDT session to leverage the same set of measurements. If *TRP List Modification Allowed* IE was affirmatively indicated by the LMF, the NE may replace TRP-A in the recommended list with TRP-B from the white list. If the NE received indications that particular TRPs are recommendations without receiving a white list from the LMF, the NE may select alternative TRPs which differ from those TRPs selected by the LMF. The NE may also select TRP IDs based on RRM measurements and/or other performance information known locally by the NE.

Additionally or alternatively, the NE may measure a larger group of TRPs, such as according to spatial relation information in an SRS configuration, and report a pre-determined number of strongest TRPs to the LMF. The NE may use different TRP IDs to reflect UE history information and/or estimated UE mobility profiles.

In certain embodiments, the LMF may receive from the NE indications that any number of TRP IDs are alternatives, enabling the LMF to interpret the information associated with the TRPs indicated by the NE accordingly. For example, a modification flag IE *(e.g., "Modification Flag* IE") in the measurement response may indicate to the LMF that missing and/or new TRP IDs should be considered a result of the modification process performed by the NE, rather than an error. The modification flag IE may be configured as a Boolean value *(e.g.,* "true" or "false") or any enumerated value *(e.g.,* "modified"), and/or may be indicated per TRP ID.

In some embodiments, if a report characteristics IE *(e.g., "Report Characteristics* IE") indicates "on-demand," the LMF may receive the list of TRP IDs and/or measurement results in, for example, a measurement response message from the NE. Alternatively, if the *Report Characteristics* IE indicates "periodic," the LMF may receive a measurement response message from the NE without the list of TRP IDs and/or measurement results, followed by, at 605, receiving at least one measurement report message from the NE including the altered or unaltered list of TRP IDs and/or measurement results according to the requested periodicity. In various embodiments, where the report characteristics IE indicates "periodic," the measurement report message may also include the modification flag IE.

At 607, the LMF may determine at least one position estimate according to the requested measurements performed by the modified set of TRP IDs, which may improve the accuracy of a position computation. For example, such an improved position estimate computation may be based on requested measurements from a modified set of TRP IDs selected by the NE at 603 that are more optimal than the list of TRP IDs selected by the LMF at 601, for example, due to the location of the modified set of TRPs relative to a UE, the location of the modified set of TRPs relative to each other, and the number of TRPs in the modified set of TRPs.

FIG. 7 illustrates an example of a system according to certain example embodiments. In one example embodiment, a system may include multiple devices, such as, for example, NE 710 and/or UE 720.

NE 710 may be one or more of a LMF, a base station (such as a NB, eNB, gNB, or NG-eNB), a serving gateway, a server, and/or any other access node or combination thereof. Furthermore, NE 710 and/or UE 720 may be one or more of a citizens broadband radio service device (CBSD).

NE 710 may further comprise at least one gNB-CU, which may be associated with at least one gNB-DU. The at least one gNB-CU and the at least one gNB-DU may be in communication via at least one F1 interface, at least one Xₙ-C interface, and/or at least one NG interface via a 5GC.

UE 720 may include one or more of a mobile device, such as a mobile phone, smart phone, personal digital assistant (PDA), tablet, or portable media player, digital camera, pocket video camera, video game console, navigation unit, such as a global positioning system (GPS) device, desktop or laptop computer, single-location device, such as a sensor or smart meter, or any combination thereof.

NE 710 and/or UE 720 may include at least one processor, respectively indicated as 711 and 721. Processors 711 and 721 may be embodied by any computational or data processing device, such as a central processing unit (CPU), application specific integrated circuit (ASIC), or comparable device. The processors may be implemented as a single controller, or a plurality of controllers or processors.

At least one memory may be provided in one or more of the devices, as indicated at 712 and 722. The memory may be fixed or removable. The memory may include computer program instructions or computer code contained therein. Memories 712 and 722 may independently be any suitable storage device, such as a non-transitory computer-readable medium. A hard disk drive (HDD), random access memory (RAM), flash memory, or other suitable memory may be used. The memories may be combined on a single integrated circuit as the processor, or may be separate from the one or more processors. Furthermore, the computer program instructions stored in the memory, and which may be processed by the processors, may be any suitable form of computer program code, for example, a compiled or interpreted computer program written in any suitable programming language.

Processors 711 and 721, memories 712 and 722, and any subset thereof, may be configured to provide means corresponding to the various blocks of FIGS. 4-6. Although not shown, the devices may also include positioning hardware, such as GPS or micro electrical mechanical system (MEMS) hardware, which may be used to determine a location of the device. Other sensors are also permitted, and may be configured to determine location, elevation, velocity, orientation, and so forth, such as barometers, compasses, and the like.

As shown in FIG. 7, transceivers 713 and 723 may be provided, and one or more devices may also include at least one antenna, respectively illustrated as 714 and 724. The device may have many antennas, such as an array of antennas configured for multiple input multiple output (MIMO) communications, or multiple antennas for multiple RATs. Other configurations of these devices, for example, may be provided. Transceivers 713 and 723 may be a transmitter, a receiver, both a transmitter and a receiver, or a unit or device that may be configured both for transmission and reception.

The memory and the computer program instructions may be configured, with the processor for the particular device, to cause a hardware apparatus, such as UE, to perform any of the processes described above *(i.e.,* FIGS. 4-6). Therefore, in certain embodiments, a non-transitory computer-readable medium may be encoded with computer instructions that, when executed in hardware, perform a process such as one of the processes described herein. Alternatively, certain embodiments may be performed entirely in hardware.

In certain embodiments, an apparatus may include circuitry configured to perform any of the processes or functions illustrated in FIGS. 4-6. For example, circuitry may be hardware-only circuit implementations, such as analog and/or digital circuitry. In another example, circuitry may be a combination of hardware circuits and software, such as a combination of analog and/or digital hardware circuitry with software or firmware, and/or any portions of hardware processors with software (including digital signal processors), software, and at least one memory that work together to cause an apparatus to perform various processes or functions. In yet another example, circuitry may be hardware circuitry and or processors, such as a microprocessor or a portion of a microprocessor, that includes software, such as firmware, for operation. Software in circuitry may not be present when it is not needed for the operation of the hardware.

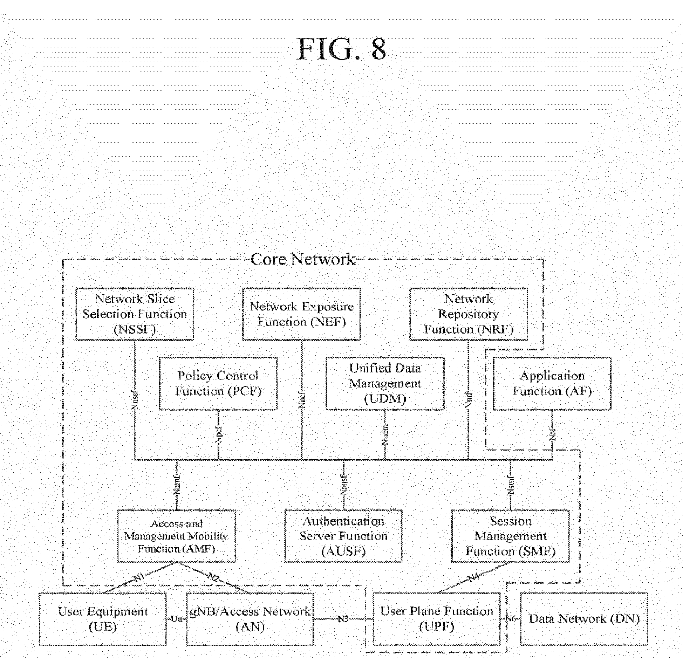

FIG. 8 illustrates an example of a 5G network and system architecture according to certain embodiments. Shown are multiple network functions that may be implemented as software operating as part of a network device or dedicated hardware, as a network device itself or dedicated hardware, or as a virtual function operating as a network device or dedicated hardware. The NE and UE illustrated in FIG. 8 may be similar to NE 710 and UE 720, respectively. The user plane function (UPF) may provide services such as intra-RAT and inter-RAT mobility, routing and forwarding of data packets, inspection of packets, user plane quality of service (QoS) processing, buffering of downlink packets, and/or triggering of downlink data notifications. The application function (AF) may primarily interface with the core network to facilitate application usage of traffic routing and interact with the policy framework.

The features, structures, or characteristics of example embodiments described throughout this specification may be combined in any suitable manner in one or more example embodiments. For example, the usage of the phrases "various embodiments," "certain embodiments," "some embodiments," or other similar language throughout this specification refers to the fact that a particular feature, structure, or characteristic described in connection with an example embodiment may be included in at least one example embodiment. Thus, appearances of the phrases "in various embodiments," "in various embodiments," "in certain embodiments," "in some embodiments," or other similar language throughout this specification does not necessarily all refer to the same group of example embodiments, and the described features, structures, or characteristics may be combined in any suitable manner in one or more example embodiments.

Additionally, if desired, the different functions or procedures discussed above may be performed in a different order and/or concurrently with each other. Furthermore, if desired, one or more of the described functions or procedures may be optional or may be combined. As such, the description above should be considered as illustrative of the principles and teachings of certain example embodiments, and not in limitation thereof.

One having ordinary skill in the art will readily understand that the example embodiments discussed above may be practiced with procedures in a different order, and/or with hardware elements in configurations which are different than those which are disclosed. Therefore, although some embodiments have been described based upon these example embodiments, it would be apparent to those of skill in the art that certain modifications, variations, and alternative constructions would be apparent, while remaining within the scope of the example embodiments.

### Partial Glossary

- 3GPP: Third Generation Partnership Project
- 5G: Fifth Generation
- 5GC: Fifth Generation Core
- 5GS: Fifth Generation System
- 5QI: Fifth Generation Quality of Service Indicator
- ACK: Acknowledgement
- AMF: Access and Mobility Management Function
- AoA: Angle of Arrival
- ASIC: Application Specific Integrated Circuit
- BS: Base Station
- CAPC: Channel Access Priority Class
- CBSD: Citizens Broadband Radio Service Device
- CCCH: Common Control Channel
- CE: Control Elements
- CG: Configured Grant
- CN: Core Network
- CU: Centralized Unit
- DCI: Downlink Control Information
- DL: Downlink
- DRB: Data Radio Bearer
- DU: Distributed Unit
- E-CID: Enhanced Cell Identification
- eMBB: Enhanced Mobile Broadband
- eMTC: Enhanced Machine Type Communication
- eNB: Evolved Node B
- eOLLA: Enhanced Outer Loop Link Adaptation
- EPS: Evolved Packet System
- gNB: Next Generation Node B
- GNSS: Global Navigation Satellite System
- GPS: Global Positioning System
- HDD: Hard Disk Drive
- ID: Identifier
- IE: Information Element
- IEEE: Institute of Electrical and Electronics Engineers
- IoT: Internet of Things
- LMF: Location Management Function
- LTE: Long-Term Evolution
- LTE-A: Long-Term Evolution Advanced
- MAC: Medium Access Control
- MBS: Multicast and Broadcast Systems
- MCS: Modulation and Coding Scheme
- MDT: Minimization of Drive Tests
- MEMS: Micro Electrical Mechanical System
- MIMO: Multiple Input Multiple Output
- MME: Mobility Management Entity
- mMTC: Massive Machine Type Communication
- MPDCCH: Machine Type Communication Physical Downlink Control Channel
- MTC: Machine Type Communication
- NAS: Non-Access Stratum
- NE: Network Entity
- NG: Next Generation
- NGAP: Next Generation Application Protocol
- NG-C: Next Generation Control Plane
- NG-eNB: Next Generation Evolved Node B
- NG-RAN: Next Generation Radio Access Network
- NR: New Radio
- NRPPa: New Radio Positioning Protocol A
- NR-U: New Radio Unlicensed
- OFDM: Orthogonal Frequency Division Multiplexing
- OLLA: Outer Loop Link Adaptation
- PDA: Personal Digital Assistance
- PDCCH: Physical Downlink Control Channel
- PDSCH: Physical Downlink Shared Channel
- PDU: Protocol Data Unit
- PHY: Physical
- PRACH: Physical Random Access Channel
- PUCCH: Physical Uplink Control Channel
- PUSCH: Physical Uplink Shared Channel
- QCI: Quality of Service Class Identifier
- QFI: Quality of Service Flow Identifier
- QoS: Quality of Service
- RAM: Random Access Memory
- RAN: Radio Access Network
- RAT: Radio Access Technology
- RE: Resource Element
- RLC: Radio Link Control
- RNTI: Radio Network Temporary Identifier
- RRC: Radio Resource Control
- RRM: Radio Resource Management
- RS: Reference Signal
- RSRP: Reference Signal Received Power
- RTOA: Relative Time of Arrival
- RTT: Round Trip Time
- SC-PTM: Single Cell - Point-to-Multipoint
- SDU: Service Data Unit
- SFN: System Frame Number
- SIB: System Information Block
- SMF: Session Management Function
- SR: Scheduling Report
- SRB: Signaling Radio Bearer
- SRS: Sounding Reference Signals
- TDOA: Time Difference of Arrival
- TR: Technical Report
- TRP: Transmission Reception Point
- TS: Technical Specification
- TTI: Transmission Time Interval
- Tx: Transmission
- UCI: Uplink Control Information
- UE: User Equipment
- UL: Uplink
- UMTS: Universal Mobile Telecommunications System
- UPF: User Plane Function
- URLLC: Ultra-Reliable and Low-Latency Communication
- UTRAN: Universal Mobile Telecommunications System Terrestrial Radio Access Network
- WLAN: Wireless Local Area Network

## Claims

1. A method of positioning a target user equipment, comprising:
receiving, by a network entity (410), at least one measurement report request from a location management function (420) comprising a list of at least one transmission reception point identifier from which measurements of uplink reference signals are requested, wherein the location management function (420) manages location service for a target user equipment;
determining, by the network entity (410), to modify at least one transmission reception point identifier in the transmission reception point measurement request list based at least in part on the at least one measurement report request; and
transmitting, by the network entity (410), at least one measurement response to the location management function (420) comprising a transmission reception point measurement response list of at least one transmission reception point identifier from which measurements are performed, wherein the transmission reception point measurement response list is different than the transmission reception point measurement request list;
the method being **characterized in that**
the at least one measurement report request further comprises one indication that the network entity (410) is allowed to modify the transmission reception point measurement request list and at least one transmission reception point modification rule configured to control by the location management function at least one modification by the network entity of at least one transmission reception point identifier.

2. The method of claim 1, wherein the at least one measurement report request further comprises at least one indication of whether the network entity (410) is allowed to select at least one transmission reception point identifier not requested by the location management function (420).

3. The method of claim 2, wherein the at least one indication indicates at least one received transmission reception point identifier that the network entity (410) is authorized to one or more of add, modify, and remove from the one or more lists.

4. The method of claim 2, wherein the at least one indication further indicates whether the at least one indication applies to each of the received one or more lists or at least one specific transmission reception point identifier.

5. The method of claim 1, wherein the at least one transmission reception point modification rule comprises one or more of a maximum number of transmission reception points, a minimum number of transmission reception points, a maximum distance between transmission reception points, a minimum distance between transmission reception points, an absolute direction of transmission reception points, a relative direction of transmission reception points, at least one indication of transmission reception points that the network entity should preserve in the list of transmission reception point identifiers, and at least one indication of transmission reception points that the network entity should include in the list of transmission reception point identifiers reported in a first measurement report but may exclude in subsequent measurement reports.

6. The method of claim 1, wherein the at least one measurement report request comprises at least one uplink relative time of arrival measurement for uplink time difference of arrival.

7. A method of positioning a target user equipment, comprising:
transmitting, by a location management function (420), at least one measurement report request to a network entity (410) comprising a list of at least one transmission reception point identifier from which measurements of uplink reference signals are requested, wherein the location management function (420) manages location service for a target user equipment,
receiving, by the location management function (420), at least one measurement response from the network entity (410) comprising a transmission reception point measurement response list of at least one transmission reception point identifier from which measurements are performed, wherein the transmission reception point measurement response list is different than the transmission reception point measurement request list; and
determining, by the location management function (420), at least one position estimate according to the requested measurements performed by the at least one received transmission reception point identifier,
the method being **characterized in that** the at least one measurement report request further comprises one indication that the network entity (410) is allowed to modify the transmission reception point measurement request list and at least one transmission reception point modification rule configured to control by the location management function at least one modification by the network entity of at least one transmission reception point identifier.

8. The method of claim 7, wherein the at least one measurement report request further comprises at least one indication of whether the network entity is allowed to select at least one transmission reception point identifier not requested by the location management function (420).

9. The method of claim 8, wherein the at least one indication indicates at least one received transmission reception point identifier that the network entity is authorized to one or more of add, modify, and remove from the one or more lists.

10. The method of claim 7, wherein the at least one transmission reception point modification rule comprises one or more of a maximum number of transmission reception points, a minimum number of transmission reception points, a maximum distance between transmission reception points, a minimum distance between transmission reception points, an absolute direction of transmission reception points, a relative direction of transmission reception points, at least one indication of transmission reception points that the network entity should preserve in the list of transmission reception point identifiers, and at least one indication of transmission reception points that the network entity should include in the list of transmission reception point identifiers reported in a first measurement report but may exclude in subsequent measurement reports.

11. The method of claim 7, wherein the at least one measurement report request comprises at least one uplink relative time of arrival measurement for uplink time difference of arrival.

12. An apparatus comprising means for performing a method according to any of claims
1-11.

13. A non-transitory, computer-readable medium comprising program instructions stored thereon which, when executed by a computer, cause the computer to carry out a method according to any of claims 1-11.

## Patentansprüche

1. Verfahren zur Positionsbestimmung einer Zielteilnehmereinrichtung, das Folgendes umfasst:
Empfangen von mindestens einer Messberichtsanforderung durch eine Netzwerkentität (410) von einer Standortverwaltungsfunktion (420), die eine Liste von mindestens einer Übertragungsempfangspunktkennung umfasst, von der Messungen von Uplinkreferenzsignalen angefordert werden, wobei die Standortverwaltungsfunktion (420) einen Standortdienst für eine Zielteilnehmereinrichtung verwaltet;
Bestimmen durch die Netzwerkentität (410), mindestens eine Übertragungsempfangspunktkennung mindestens teilweise auf Basis der mindestens einen Messberichtsanforderung in der Liste der Übertragungsempfangspunktmessanforderungen zu modifizieren; und
Übertragen von mindestens einer Messantwort durch die Netzwerkentität (410) zur Standortverwaltungsfunktion (420), die eine Liste mit Übertragungsempfangspunktmessantworten von mindestens eine Übertragungsempfangspunktkennung umfasst, von der Messungen durchgeführt werden, wobei sich die Liste der Übertragungsempfangspunktmessantworten von der Liste der Übertragungsempfangspunktmessanforderungen unterscheidet;
wobei das Verfahren **dadurch gekennzeichnet ist, dass** die mindestens eine Messberichtsanforderung ferner eine Anzeige umfasst, dass es der Netzwerkentität (410) erlaubt ist, die Liste der Übertragungsempfangspunktmessanforderungen und mindestens eine Übertragungsempfangspunktmodifikationsregel zu modifizieren, die dazu ausgelegt ist, mindestens eine Modifikation durch die Netzwerkentität von mindestens einer Übertragungsempfangspunktkennung durch die Standortverwaltungsfunktion zu steuern.

2. Verfahren nach Anspruch 1, wobei die mindestens eine Messberichtsanforderung ferner eine Anzeige dazu umfasst, ob es der Netzwerkentität (410) erlaubt ist, mindestens eine Übertragungsempfangspunktkennung auszuwählen, die von der Standortverwaltungsfunktion (420) nicht angefordert ist.

3. Verfahren nach Anspruch 2, wobei die mindestens eine Anzeige mindestens eine empfangene Übertragungsempfangspunktkennung anzeigt, die die Netzwerkentität (410) autorisiert, eines oder mehreres von Folgendem durchzuführen: Hinzufügen, Modifizieren und Entfernen aus der einen oder den mehreren Listen.

4. Verfahren nach Anspruch 2, wobei die mindestens eine Anzeige ferner anzeigt, ob die mindestens eine Anzeige für jede der einen oder der mehreren empfangenen Listen oder mindestens eine spezifische Übertragungsempfangspunktkennung gilt.

5. Verfahren nach Anspruch 1, wobei die mindestens eine Übertragungsempfangspunktmodifikationsregel eines oder mehreres von einer maximalen Anzahl von Übertragungsempfangspunkten, einer minimalen Anzahl von Übertragungsempfangspunkten, einem maximalen Abstand zwischen Übertragungsempfangspunkten, einem minimalen Abstand zwischen Übertragungsempfangspunkten, einer absoluten Richtung von Übertragungsempfangspunkten, einer relativen Richtung von Übertragungsempfangspunkten, mindestens einer Anzeige von Übertragungsempfangspunkten, die die Netzwerkentität in der Liste von Übertragungsempfangspunktkennungen erhalten sollte, und mindestens einer Anzeige von Übertragungsempfangspunkten, die die Netzwerkentität in die Liste von Übertragungsempfangspunktkennungen, die in einem ersten Messbericht gemeldet werden, einbinden sollte, von nachfolgenden Messberichten aber ausschließen kann.

6. Verfahren nach Anspruch 1, wobei die mindestens eine Messberichtsanforderung mindestens eine relative Uplinkankunftszeitmessung für eine Uplinkankunftszeitdifferenz umfasst.

7. Verfahren zur Positionsbestimmung einer Zielteilnehmereinrichtung, das Folgendes umfasst:
Übertragen von mindestens einer Messberichtsanforderung durch eine Standortverwaltungsfunktion (420) zu einer Netzwerkentität (410), die eine Liste von mindestens einer Übertragungsempfangspunktkennung umfasst, von der Messungen von Uplinkreferenzsignalen angefordert werden, wobei die Standortverwaltungsfunktion (420) einen Standortdienst für eine Zielteilnehmereinrichtung verwaltet,
Empfangen von mindestens einer Messantwort durch die Standortverwaltungsfunktion (420) von der Netzwerkentität (410), die eine Liste mit Übertragungsempfangspunktmessantworten von mindestens einer Übertragungsempfangspunktkennung umfasst, von der Messungen durchgeführt werden, wobei sich die Liste der Übertragungsempfangspunktmessantworten von der Liste der Übertragungsempfangspunktmessanforderungen unterscheidet; und
Bestimmen von mindestens einer Positionsschätzung durch die Standortverwaltungsfunktion (420) gemäß den angeforderten Messungen, die von der mindestens einen empfangenen Übertragungsempfangspunktkennung durchgeführt werden,
wobei das Verfahren **dadurch gekennzeichnet ist, dass** die mindestens eine Messberichtsanforderung ferner eine Anzeige umfasst, dass es der Netzwerkentität (410) erlaubt ist, die Liste der Übertragungsempfangspunktmessanforderungen und mindestens eine Übertragungsempfangspunktmodifikationsregel zu modifizieren, die dazu ausgelegt ist, mindestens eine Modifikation durch die Netzwerkentität von mindestens einer Übertragungsempfangspunktkennung durch die Standortverwaltungsfunktion zu steuern.

8. Verfahren nach Anspruch 7, wobei die mindestens eine Messberichtsanforderung ferner eine Anzeige dazu umfasst, ob es der Netzwerkentität erlaubt ist, mindestens eine Übertragungsempfangspunktkennung auszuwählen, die von der Standortverwaltungsfunktion (420) nicht angefordert ist.

9. Verfahren nach Anspruch 8, wobei die mindestens eine Anzeige mindestens eine empfangene Übertragungsempfangspunktkennung anzeigt, die die Netzwerkentität autorisiert, eines oder mehreres von Folgendem durchzuführen: Hinzufügen, Modifizieren und Entfernen aus der einen oder den mehreren Listen.

10. Verfahren nach Anspruch 7, wobei die mindestens eine Übertragungsempfangspunktmodifikationsregel einen oder mehrere einer maximalen Anzahl von Übertragungsempfangspunkten, einer minimalen Anzahl von Übertragungsempfangspunkten, einem maximalen Abstand zwischen Übertragungsempfangspunkten, einem minimalen Abstand zwischen Übertragungsempfangspunkten, einer absoluten Richtung von Übertragungsempfangspunkten, einer relativen Richtung von Übertragungsempfangspunkten, mindestens einer Anzeige von Übertragungsempfangspunkten, die die Netzwerkentität in der Liste von Übertragungsempfangspunktkennungen erhalten sollte, und mindestens einer Anzeige von Übertragungsempfangspunkten, die die Netzwerkentität in die Liste von Übertragungsempfangspunktkennungen, die in einem ersten Messbericht gemeldet werden, einbinden sollte, von nachfolgenden Messberichten aber ausschließen kann.

11. Verfahren nach Anspruch 7, wobei die mindestens eine Messberichtsanforderung mindestens eine relative Uplinkankunftszeitmessung für eine Uplinkankunftszeitdifferenz umfasst.

12. Vorrichtung, die Mittel zum Durchführen eines Verfahrens nach einem der Ansprüche 1-11 umfasst.

13. Nichttransitorisches, computerlesbares Medium, auf dem Programmanweisungen gespeichert sind, die, wenn sie von einem Computer ausgeführt werden, den Computer veranlassen, ein Verfahren gemäß einem der Ansprüche 1-11 umzusetzen.

## Revendications

1. Procédé de positionnement d'un équipement utilisateur cible, comprenant :
la réception, par une entité réseau (410), d'au moins une demande rapport de mesure en provenance d'une fonction de gestion d'emplacement (420) comprenant une liste d'au moins un identifiant de point de transmission et de réception à partir duquel des mesures de signaux de référence de liaison montante sont demandées, dans lequel la fonction de gestion d'emplacement (420) gère un service d'emplacement pour un équipement utilisateur cible ;
la détermination, par l'entité réseau (410), de modifier au moins un identifiant de point de transmission et de réception dans la liste de demandes de mesure de point de transmission et de réception en se basant au moins en partie sur l'au moins une demande rapport de mesure ; et
la transmission, par l'entité réseau (410), d'au moins une réponse de mesure à la fonction de gestion d'emplacement (420) comprenant une liste de réponses de mesure de point de transmission et de réception d'au moins un identifiant de point de transmission et de réception à partir duquel les mesures sont effectuées, dans lequel la liste de réponses de mesure de point de transmission et de réception est différente de la liste de demandes de mesure de point de transmission et de réception ;
le procédé étant **caractérisé en ce que**
l'au moins une demande rapport de mesure comprend en outre une indication selon laquelle l'entité réseau (410) est autorisée à modifier la liste de demandes de mesure de point de transmission et de réception, et au moins une règle de modification de point de transmission et de réception pour contrôler, par la fonction de gestion d'emplacement, au moins une modification par l'entité réseau d'au moins un identifiant de point de transmission et de réception.

2. Procédé selon la revendication 1, dans lequel l'au moins une demande rapport de mesure comprend en outre au moins une indication précisant si l'entité réseau (410) est autorisée à sélectionner au moins un identifiant de point de transmission et de réception non demandé par la fonction de gestion d'emplacement (420).

3. Procédé selon la revendication 2, dans lequel l'au moins une indication indique au moins un identifiant de point de transmission et de réception reçu que l'entité réseau (410) est autorisée à ajouter aux une ou plusieurs listes, à modifier dans les une ou plusieurs listes et/ou à supprimer des une ou plusieurs listes.

4. Procédé selon la revendication 2, dans lequel l'au moins une indication indique en outre si l'au moins une indication s'applique à chacune des une ou plusieurs listes reçues ou à au moins un identifiant de point de transmission et de réception spécifique.

5. Procédé selon la revendication 1, dans lequel l'au moins une règle de modification de point de transmission et de réception comprend un ou plusieurs parmi un nombre maximal de points de transmission et de réception, un nombre minimal de points de transmission et de réception, une distance maximale entre les points de transmission et de réception, une distance minimale entre les points de transmission et de réception, une direction absolue de points de transmission et de réception, une direction relative de points de transmission et de réception, au moins une indication de points de transmission et de réception que l'entité de réseau doit conserver dans la liste d'identifiants de points de transmission et de réception, et au moins une indication de points de transmission et de réception que l'entité réseau doit inclure dans la liste d'identifiants de points de transmission et de réception signalés dans un premier rapport de mesure, mais qu'elle peut exclure des rapports de mesure suivants.

6. Procédé selon la revendication 1, dans lequel l'au moins une demande rapport de mesure comprend au moins une mesure de temps d'arrivée relatif de liaison montante pour une différence de temps d'arrivée de liaison montante.

7. Procédé de positionnement d'un équipement utilisateur cible, comprenant :
la transmission, par une fonction de gestion d'emplacement (420), d'au moins une demande rapport de mesure à une entité réseau (410) comprenant une liste d'au moins un identifiant de point de transmission et de réception à partir duquel des mesures de signaux de référence de liaison montante sont demandées, dans lequel la fonction de gestion d'emplacement (420) gère un service d'emplacement pour un équipement utilisateur cible,
la réception, par la fonction de gestion d'emplacement (420), d'au moins une réponse de mesure en provenance de l'entité réseau (410) comprenant une liste de réponses de mesure de point de transmission et de réception d'au moins un identifiant de point de transmission et de réception à partir duquel les mesures sont effectuées, dans lequel la liste de réponses de mesure de point de transmission et de réception est différente de la liste de demandes de mesure de point de transmission et de réception ; et
la détermination, par la fonction de gestion d'emplacement (420), d'au moins une estimation de position selon les mesures demandées effectuées par l'au moins un identifiant de point de transmission et de réception reçu,
le procédé étant **caractérisé en ce que**
l'au moins une demande rapport de mesure comprend en outre une indication selon laquelle l'entité réseau (410) est autorisée à modifier la liste de demandes de mesure de point de transmission et de réception, et au moins une règle de modification de point de transmission et de réception pour contrôler, par la fonction de gestion d'emplacement, au moins une modification par l'entité réseau d'au moins un identifiant de point de transmission et de réception.

8. Procédé selon la revendication 7, dans lequel l'au moins une demande rapport de mesure comprend en outre au moins une indication précisant si l'entité réseau est autorisée à sélectionner au moins un identifiant de point de transmission et de réception non demandé par la fonction de gestion d'emplacement (420).

9. Procédé selon la revendication 8, dans lequel l'au moins une indication indique au moins un identifiant de point de transmission et de réception reçu que l'entité réseau est autorisée à ajouter aux une ou plusieurs listes, à modifier dans les une ou plusieurs listes et/ou à supprimer des une ou plusieurs listes.

10. Procédé selon la revendication 7, dans lequel l'au moins une règle de modification de point de transmission et de réception comprend un ou plusieurs parmi un nombre maximal de points de transmission et de réception, un nombre minimal de points de transmission et de réception, une distance maximale entre les points de transmission et de réception, une distance minimale entre les points de transmission et de réception, une direction absolue de points de transmission et de réception, une direction relative de points de transmission et de réception, au moins une indication de points de transmission et de réception que l'entité de réseau doit conserver dans la liste d'identifiants de points de transmission et de réception, et au moins une indication de points de transmission et de réception que l'entité réseau doit inclure dans la liste d'identifiants de points de transmission et de réception signalés dans un premier rapport de mesure, mais qu'elle peut exclure des rapports de mesure suivants.

11. Procédé selon la revendication 7, dans lequel l'au moins une demande rapport de mesure comprend au moins une mesure de temps d'arrivée relatif de liaison montante pour une différence de temps d'arrivée de liaison montante.

12. Appareil comprenant des moyens pour mettre en œuvre un procédé selon l'une des revendications 1 à 11.

13. Support non transitoire lisible par ordinateur comprenant des instructions de programme stockées sur celui-ci qui, lorsqu'elles sont exécutées par un ordinateur, amènent l'ordinateur à mettre en œuvre un procédé selon l'une des revendications 1 à 11.
